(19) **Europäisches Patentamt**
**European Patent Office**
**Office européen des brevets**

(11) **EP 4 604 606 A1**

(12) **EUROPEAN PATENT APPLICATION**

(43) Date of publication:
**20.08.2025 Bulletin 2025/34**

(21) Application number: **24305256.0**

(22) Date of filing: **14.02.2024**

(51) International Patent Classification (IPC):
*H04W 28/02* (2009.01)  *H04W 72/543* (2023.01)
*H04L 47/2491* (2022.01)  *H04W 72/0446* (2023.01)

(52) Cooperative Patent Classification (CPC):
**H04W 72/543; H04L 47/2491; H04W 28/0215;**
**H04W 28/0268;** H04W 72/0446

---

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicants:
• **Mitsubishi Electric R&D Centre Europe B.V.**
**1119 NS  Schiphol Rijk Amsterdam (NL)**
Designated Contracting States:
**FR**

• **MITSUBISHI ELECTRIC CORPORATION**
**Chiyoda-ku**
**Tokyo 100-8310 (JP)**

(72) Inventors:
• **BONNEVILLE, Hervé**
**35708 RENNES CEDEX 7 (FR)**
• **GRESSET, Nicolas**
**35708 RENNES CÉDEX 7 (FR)**
• **Letessier, Jonathan**
**35708 RENNES CEDEX 7 (FR)**

(74) Representative: **Plasseraud IP**
**104 Rue de Richelieu**
**CS92104**
**75080 Paris Cedex 02 (FR)**

---

(54) **A CLOSE-LOOP OPTIMIZATION OF BRIDGE DELAYS AND SCHEDULING FOR MOBILITY IN TIME SENSITIVE NETWORKS**

(57)    The present disclosure relates to a method performed by an entity of a radiofrequency cellular network (5GS), for generating and forwarding data to schedule transmission times of intermediary bridges between end stations communicating with each other via a time sensitive network (TSN), at least one bridge of said intermediary bridges being a radiofrequency bridge involving said radiofrequency cellular network (5GS). More particularly, at least upon reception of a request from an entity (CNC) of the time sensitive network (TSN), said radiofrequency cellular network entity determines a capability prediction Qp of a current Quality of Service of said wireless bridge, and transmits at least data of said prediction Qp to said entity (CNC) of the time sensitive network (TSN) in view to schedule said transmission times, based on said capability prediction Qp and further on a prediction horizon Hp corresponding to a validity duration of the QoS capability prediction Qp.

FIG. 15

## Description

The present disclosure relates to a method and system for integrating a wireless bridge in a Time Sensitive Network (TSN) taking into account variations of Quality of Service of the radio links (for example due to terminals mobility).

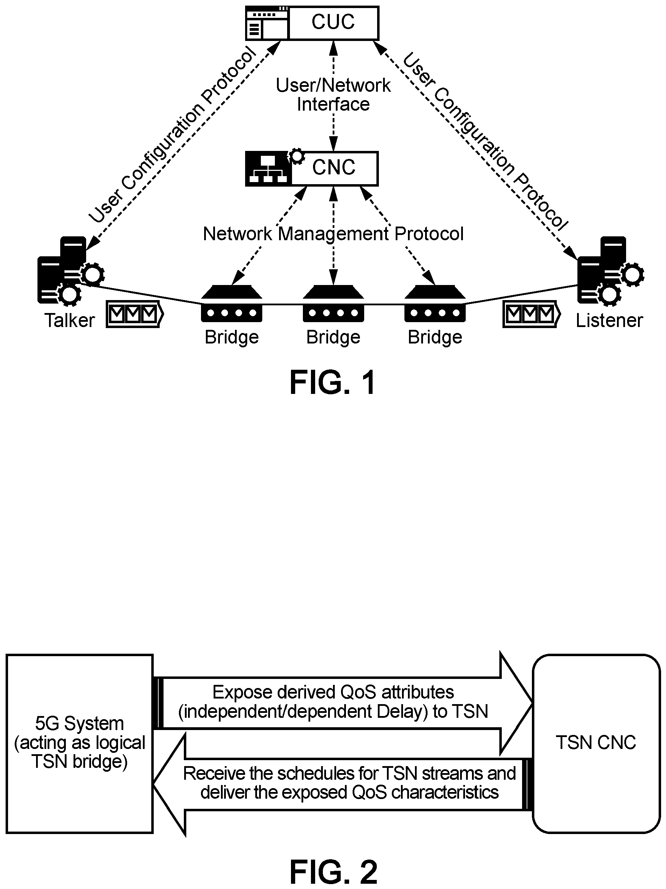

In TSN networks, for achieving a guaranteed end to end latency for the transmission of a packet between a talker and a listener, it is necessary to rely on a predetermined data path or route and scheduling of operation of the network elements along the path. A TSN comprises several elements as illustrated in figure 1, such as:

- End stations such as terminals of a talker and a listener,
- A top system for Centralized User Configuration (CUC): the end stations transmit their flow requirements to the CUC system and the CUC system transmits the user configuration to a Centralized Network Configuration node (CNC),
- The CNC node receives TSN flow requirements and TSN topology from the CUC system. It gets from the different TSN bridges egress and ingress port identification, traffic class and QoS indicators as minimum and maximum delays per port pairs. The CNC node calculates a schedule, i.e. a transmission time, for the intermediary bridges between the TSN end stations, and the control parameters of the time aware shaping (TAS) of the different bridges as well as the routing decisions, i.e. bridge selection. These calculations are performed to fulfil the data flow requirements of the TSN flows.
- Entities called "Bridges" are packet switching devices of a TSN. Packets arriving to one port (ingress) of a bridge can be routed to another port (egress) in a bounded delay. Routing delays are advertised to the CNC node. The packets are buffered at one egress port until the port is opened following a time-gating window table configured by the CNC node.

The TSN bridges relay the packets from one port to another, according to some parameters specific to each port pair, represented by an internal link. The parameters are usually:

- a dependent delay factor (which typically can depend on the payload and can be seen as the inverse of the instantaneous throughput of the link), and

- independent delay(s) (typically a fixed delay for each communication, for instance).

In a centralized implementation of the TSN, these parameters are provided to the CNC node which gathers the topology and capacities of the network links and the requirements of the data flows. After defining the data path for transmitting packets from one end station to another end station through the bridges of the TSN, the CNC node computes the scheduling of the gates openings for the packets to flow from one ES (End Station) to another ES while guaranteeing their transmission delay. For doing so, the CNC node computes the cumulated delay from egress port to egress port of two consecutive bridges on the data path, where the egress ports are defined at the output port of the bridges in the flow direction of the packets along the path (while ingress ports are the bridges input ports).

Hence, the typical configuration loop between the CNC node and the bridges of the TSN network can be described as presented hereafter, while referring to figure 2 now.

1) In a first step, the CNC node collects QoS capabilities from the different TSN bridges composing the TSN, typically independent and dependant delays.

2) The CNC node computes a schedule taking into account data flow characteristics and TSN bridges QoS capabilities such that the schedule avoids packets collisions in the network

3) The CNC node provides to each TSN bridge the computed schedule it is concerned about, typically in the form of a time-gating window table.

From then, data flows can be delivered with time guaranties.

The time it could take to execute the configuration loop can be quite long, typically from a few seconds to several hours depending on the topology complexity and the CUC system and CNC node(s) computation capabilities.

In the state-of-the-art, this configuration loop is executed when there is a data flow which is added, removed or has its QoS requirement modified, and when the TSN topology is modified, i.e. when TSN bridges are added or removed. Those events typically correspond to the modification of a production line in a factory, which are a rather rare event.

In the state-of-the-art, it is assumed that the QoS capabilities provided by the TSN bridges to the CNC nodes are guaranteed for ever.

Hence, in the state-of-the-art, the operation window, defined as the time period during which the schedule computed by the CNC (the time-gating configuration) remains valid is not an issue, so as the configuration loop time.

However, when considering integrating wireless network devices in a TSN typically where at least one TSN bridge is involved as a wireless network device (for example a cellular radiofrequency network such as a 3GPP 5G system), the assumption of having QoS capabilities provided by the TSN bridges guaranteed for ever is not well adapted to wireless network devices, where the radio conditions can evolve in space and time, leading to evolving throughput and transmission delays.

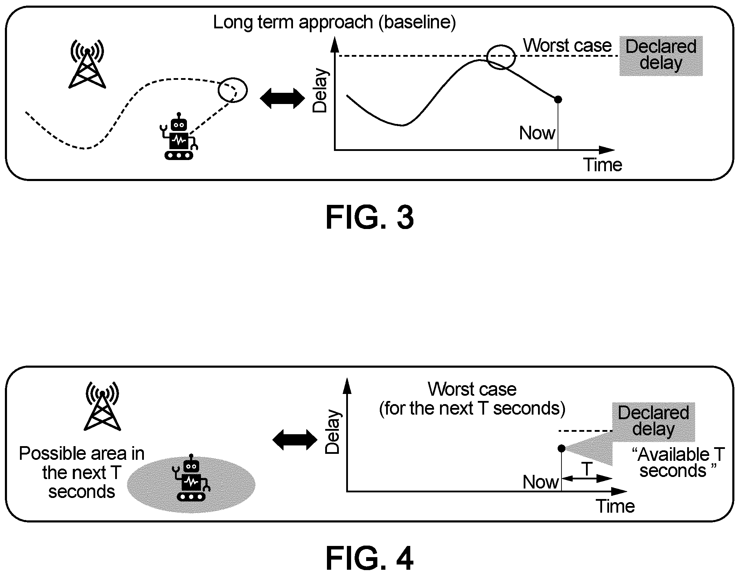

As for another example of a mobile element in a factory as a moving robot, its radio conditions can evolve when the robot moves around the factory. The state-of-the-art time-gating window can be determined only on a basis of a worst-case scenario regarding the QoS capabilities (e.g. transmission delay) announced by the network devices in space and time, i.e., declaring the performance related with cell edge positions, as illustrated in figure 3.

This leads to under-optimised utilisation of the wireless network resources.

Indeed, in a situation where a current device is not experiencing the worst case QoS capabilities, it would be beneficial for this current device and for the other devices to consider local accurate QoS capability. For example, less resources need to be reserved for the current device, which can be better shared between all devices.

However, this is not possible with the state-of-the-art operation window, which does not assume that network devices QoS capabilities may vary.

Hence, considering mobile devices in a TSN raises several challenges:

- Wireless channel fluctuates due to environment mobility or moving terminals,
- Transmission delays in 5G systems vary in time,
- CNC node's schedule computation takes some time, on its end,
- TSN configuration loop (get delays/compute schedule/send the schedule) has also a minimum value delay not necessarily compatible with wireless transmission delay variations.

The present disclosure aims to improve the situation.

It proposes a method performed by an entity of a radiofrequency cellular network, for generating and forwarding data to schedule transmission times of intermediary bridges between end stations communicating with each other via a time sensitive network, at least one bridge of said intermediary bridges being a radiofrequency bridge involving said radiofrequency cellular network.

More particularly, at least upon reception of a request from an entity of the time sensitive network, the radiofrequency cellular network entity determines a capability prediction Qp of a current Quality of Service (QoS) of the wireless bridge, and transmits at least data of said prediction Qp to said entity of the time sensitive network in view to schedule said transmission times, based on said capability prediction Qp and further on a prediction horizon Hp corresponding to a validity duration of the QoS capability prediction Qp.

The aforesaid entity of the time sensitive network can be for example a Centralized Network Configuration node (CNC node) of the time sensitive network, which is in charge of scheduling transmission times of intermediary bridges between the end stations communicating through the time sensitive network. This operation is also called hereafter a "bridge scheduling".

According to the present description, this operation is optimally performed thanks to the cooperation between this entity of the time sensitive network and the aforesaid entity of the radiofrequency cellular network. Indeed, this entity of the radiofrequency cellular network (which can be an eNodeB of the cellular network, or any entity of the core network, or a base station, etc.) can be in charge of collecting, among wireless devices connected to the cellular network and for example involved in the data transmission between the end stations, their QoS prediction Qp (for a given horizon Hp). Based on this collection, the entity of the radiofrequency cellular network can determine a corresponding QoS prediction Qp (for a general horizon Hp) of the radiofrequency cellular network, as a bridge of the time sensitive network. Then, the entity of the radiofrequency cellular network can forward at least the prediction Qp to the entity of the time sensitive network to perform the bridge scheduling.

Indeed, according to a first embodiment, the horizon Hp of a cellular network QoS prediction Qp can be determined along with the prediction Qp by the entity of the cellular network, and be given to the entity of the time sensitive network to perform the bridge scheduling.

In a second embodiment, the horizon Hp can be imposed by the entity of the time sensitive network, and the entity of the cellular network has to determine a QoS prediction Qp of the cellular network that can be guaranteed within this imposed horizon.

Therefore, in the first embodiment, said radiofrequency cellular network entity:

- determines said prediction horizon Hp, and

- transmits data of said prediction horizon Hp to said entity of the time sensitive network in view to schedule said transmission times, based on the QoS capability prediction Qp and the prediction horizon Hp provided by the radiofrequency cellular network entity.

In the second embodiment, said radiofrequency cellular network entity:

- receives with said request an imposed value for said prediction horizon Hp,

- determines the QoS capability prediction Qp which can be guaranteed for the imposed prediction horizon Hp, and

- transmits data of the QoS capability prediction Qp determined based on the imposed value to said entity of the time sensitive network in view to schedule said transmission times, based on the value of the prediction horizon Hp imposed to the radiofrequency cellular network entity and on the corresponding QoS capability prediction Qp determined by the radiofrequency cellular network entity.

In an intermediate embodiment between the first and second embodiment, the radiofrequency cellular network entity:

- receives with said request an imposed minimum value for said prediction horizon Hp,

- determines a QoS capability prediction Qp and a value of a prediction horizon Hp corresponding to the determined QoS capability prediction Qp, said determined prediction horizon Hp value being one of:

    * a second value of a prediction horizon Hp corresponding to the determined QoS capability prediction Qp, when the second value can be above the imposed minimum value, and

    * the imposed minimum value, when the QoS capability prediction Qp is to be determined on the basis of the imposed minimum value,

- and transmits data of the QoS capability prediction Qp and of the determined value of prediction horizon Hp, to said entity of the time sensitive network in view to schedule said transmission times.

Therefore, this intermediate embodiment involves a "negotiation" between the entity of the time sensitive network and the radiofrequency cellular network entity, based on a minimum horizon Hp to guarantee.

Moreover, it can be noted that, in a "synchronous mode", the entity of the radiofrequency cellular network answers to the successive requests of the entity of the time sensitive network, and forwards in response at least the prediction Qp. However, in an "asynchronous mode", the entity of the radiofrequency cellular network can transmit spontaneously the prediction Qp to the entity of the time sensitive network, for example if the QoS conditions have changed significantly since the latest Qp transmission.

In an embodiment described hereafter, the entity of the radiofrequency cellular network answers to each request of the entity of the time sensitive network, the requests being emitted during respective transmission cycles as explained below.

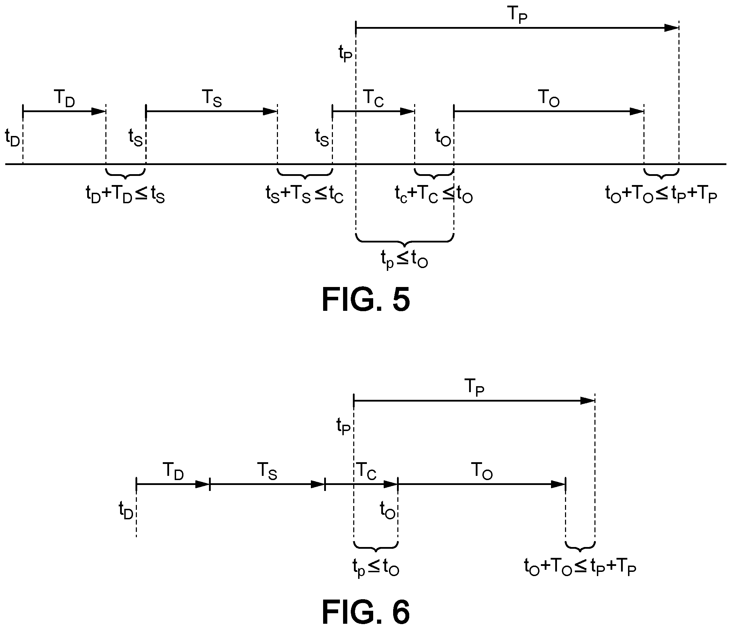

In this embodiment, the radiofrequency cellular network entity receives furthermore from the entity of the time sensitive network a request ("Configure(schedule)") to configure said wireless bridge according to said scheduled transmission times, and the request for QoS capability prediction Qp precedes ($t_D$) the request to configure the wireless bridge (tc) within an operation cycle ending with a period ($T_O$, as shown in the examples of embodiment of figures 5 and 6 in the appended drawings) of effective data transmission between the end stations.

In this embodiment, a total duration of said operation cycle can be determined especially on the basis of the prediction horizon Hp given for said operation cycle, said operation cycle ending before said given prediction horizon Hp.

In an embodiment related to a so-called "pipelining mode" hereafter, the request for QoS capability prediction Qp of a current operation cycle is received by the radiofrequency cellular network entity before the end of a period ($T_O$) of effective data transmission of a previous operation cycle preceding said current operation cycle.

In an embodiment related to a so-called "parallel mode", the request for QoS capability prediction Qp of a current operation cycle is received by the radiofrequency cellular network entity before the request to configure the wireless bridge (tc) of a previous operation cycle preceding said current operation cycle.

As indicated above, the radiofrequency cellular network entity is in charge of determining the prediction Qp of the cellular network. In an embodiment, it can typically:

- collect, from each one of the elements of the radiofrequency cellular network intervening in a current communication, the QoS capability prediction Qpi of said each one element, said QoS capability prediction Qpi being guaranteed for a corresponding prediction horizon Hpi, and

- determine a prediction horizon Hp of the wireless bridge, as a function of the respective prediction horizons Hpi.

Typically, the radiofrequency cellular network entity determines a capability prediction Qpi (dependant and independent delays) of each port pair intervening in the communication cycle to schedule. As predictions Qpi can be a list (or a vector) of values corresponding to a capability per port pair, the respective horizons Hpi can be a list of values according to the predictions Qpi. However, in this embodiment, it is chosen to define a unique value for the horizon Hp assigned to a communication cycle, representing thus a validity duration common to all the QoS capabilities Qp for that communication cycle.

It can be moreover decided that this common prediction horizon Hp is the shortest prediction horizon among the horizons Hpi collected over the elements of the radiofrequency cellular network (either by the entity of the cellular network or by the entity of the time sensitive network).

The present description aims also at a computer program comprising instructions causing the implementation of the method above, when these instructions are executed by a processing unit.

The instructions can be distributed between respective processing units of the entity of the cellular network and the entity of the time sensitive network.

The present description aims also at an entity of a radiofrequency cellular network, comprising a processing unit to perform the method as presented above.

Such an entity can be configured to be incorporated typically in a core network of said radiofrequency cellular network, and/or can correspond to one element among an eNodeB and a gNB of said radiofrequency cellular network.

The present description aims also at a system comprising the aforesaid entity of the radiofrequency cellular network, associated to an entity of the time sensitive network configured for scheduling transmission times of intermediary bridges between end stations communicating with each other via the time sensitive network (at least one bridge of said intermediary bridges being a radiofrequency bridge involving the radiofrequency cellular network). In particular, the entity of the time sensitive network is configured to transmit a request to the entity of the radiofrequency cellular network to determine a QoS capability prediction Qp of the wireless bridge, and to schedule said transmission times based on said QoS capability prediction Qp provided by the entity of a radiofrequency cellular network and further on a prediction horizon Hp corresponding to a validity duration of said QoS capability prediction Qp.

This entity of the time sensitive network can be a Centralized Network Configuration node of the time sensitive network.

In an embodiment, the entity of the time sensitive network transmits to the entity of the radiofrequency cellular network the request to determine at least the QoS capability prediction Qp of the wireless bridge, and schedules said transmission times based on said determined capability prediction Qp and further on the prediction horizon Hp during which the entity of the radiofrequency cellular network guarantees said determined capability prediction Qp.

Other features, details and advantages will be shown in the following detailed description and on the figures, on which:

- Figure 1 illustrates schematically a Time Sensitive Network (TSN) general architecture,
- Figure 2 illustrates usual exchanged messages between a CNC Node and a 5G system element, especially for the exposure of QoS capabilities towards TSN-CNC,
- Figure 3 illustrates the usual "worse case" delay declaration according to the prior art approach,
- Figure 4 illustrates the approach according to the present description, with a variable declaration of delays,
- Figure 5 illustrates a timeline of sequential steps to take into account,
- Figure 6 illustrates the timeline of figure 5, but without gaps,
- Figure 7 illustrates exchanged messages between a CNC node and a 5G system element according to a first embodiment, where the 5G system element provides a prediction horizon Hp, composed of a duration $T_P$ and optionally its starting time $t_p$,
- Figure 8 illustrates exchanged messages between a CNC node and a 5G system element according to a second embodiment, where the prediction horizon duration Hp is provided to the 5G system element which takes it into account for providing back QoS capability predictions that should remain valid during the provided prediction horizon,
- Figure 9 illustrates exchanged messages between a CNC node and a 5G system element according to an embodiment where, for example, the prediction horizon Hp is given by the 5G system element to the CNC node, defining thus a remaining time for the CNC node to compute the scheduling, and imposing thereby the time $T_s$ taken for this computation,
- Figure 10 shows a "pipelining" operating mode for processing several successive operation windows,
- Figure 11 shows a "parallel" operating mode for processing several successive operation windows,

- Figure 12 shows an example of the used operation modes for successive windows in the first or second embodiment, according to the pipelining mode,
- Figure 13 shows an example of the used operation modes for successive windows in the embodiment of figure 9, in the pipelining mode,
- Figure 14 shows a hybrid embodiment between first and second embodiments, establishing a trade-off for the prediction horizon Hp to apply for the scheduling through a negotiation between the CNC and the 5GS.
- Figure 15 shows schematically an entity of the radiofrequency cellular network 5GS in a system including further an entity CNC of the time sensitive network TSN cooperating with the entity of the cellular network 5GS to implement the method presented above, according to an example of embodiment.

Hereafter the wording "CNC" or "CNC node" relates to an entity in charge of computing the data flows scheduling of the bridges of a Time Sensitive Network (TSN). It can be for example (but not limited to) a Centralized Network Configuration node of the TSN.

One of the bridges of the TSN is a wireless bridge involving a radiofrequency cellular network (a 5G network for example). The wording "5GS" relates to this radiofrequency cellular network, typically including some radio components and a core network component. The 5GS includes an entity which is in charge of exchanging messages with the CNC node so as to perform the computing of the data flows scheduling of the bridges, named also the "bridge scheduling". Hereafter, the wording "5G" or "5G network" aims at such a radiofrequency cellular network (being of 5G type or of any other network generation).

In the approach described hereafter, compared to the prior-art situation shown in figure 3, a current accurate Quality of Service (QoS) condition of the 5G network is assessed for a current operation window. A time parameter can therefore be introduced in the operation window determination (which is supposed then to be valid for a given duration), for the bridge scheduling, as illustrated in figure 4.

Indeed, since the Quality of Service (QoS) in the radiofrequency cellular network can vary depending on the wireless network's conditions, including terminals positions, a QoS can be predicted for a finite time period of validity. The prediction is called "QoS capabilities prediction" below and noted "Qp" and its time period of validity is called "prediction horizon" and noted "Hp".

Several parameters in the 5G network have an impact on the fact that the scheduling computed with some bridge QoS capabilities, based on the QoS capabilities prediction from the 5GS, will remain valid (and by consequence ensure an overall guaranteed control of the end-to-end delays) during an operation window for TSN end stations possibly embedded in moving 5G terminals. According to the scenario, some of these parameters are not tuneable (and may be predetermined, measurable, fixed or variable but calculated at once), while the others can be tuned. These parameters are at least characterizing:

- The time required to collect QoS capabilities prediction from the 5G elements, and their prediction horizon. The horizon may not be provided at the time a QoS capabilities prediction is asked for, and can be collected for example later for a future computation, and in this case the available QoS capabilities prediction (obtained before a current cycle) can be used. Finally, the QoS capabilities can be collected at a lower pace than the scheduling computation.
- The time required to obtain the related TSN bridges QoS capabilities and to compute the TSN scheduling at the CNC node.
- The time to configure the TSN bridges accordingly.
- The time and duration of the operation window during which the TSN bridges configuration is applied, preferably according to the prediction horizon of the collected QoS capabilities prediction.

An embodiment proposes then a method for:

- collecting, from the different network elements in the TSN (including the 5GS), the values of the aforesaid non-tuneable parameters,
- computing the tuneable parameters for ensuring a guaranteed quality of service in the operation window,
- applying the corresponding configuration for the TSN data transmission during the operation window.

It is thus proposed to tune the duration of the sequential steps in order to ensure a good operation of the TSN over the 5G involving mobility of terminals.

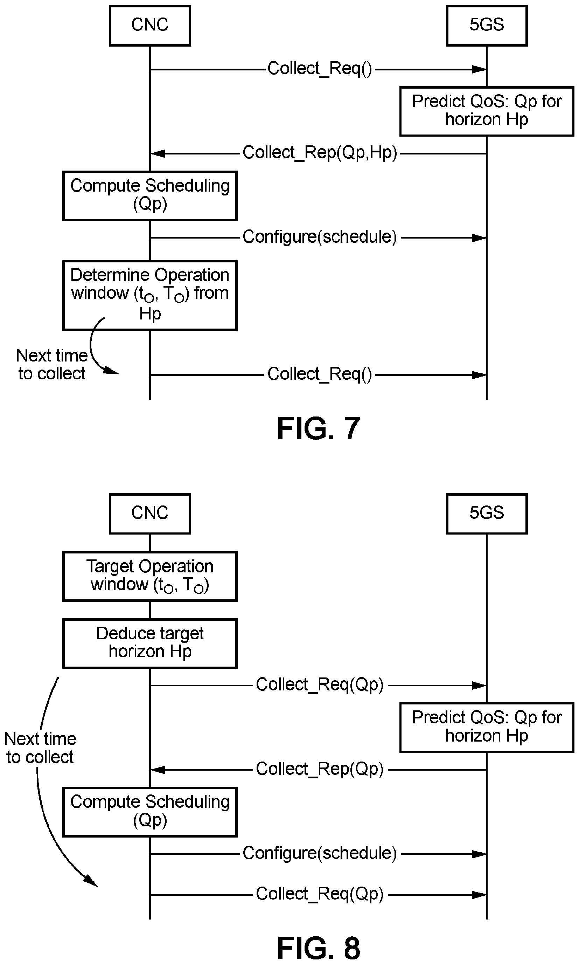

In a first embodiment shown on figure 7, the wireless network feeds back the QoS capabilities prediction and the prediction horizon for each device (the time during which the QoS prediction remains guaranteed, as predicted by the 5GS), and the operation window duration is adapted to ensure that the computed scheduling will operate during a time window compatible with the lowest prediction horizon found in the 5G.

In a second embodiment shown on figure 8, the 5GS can predict the QoS capabilities for any given prediction horizon. The prediction horizon Hp is required from the CNC for operating during a target operation window and is informed to the 5GS for its computation of the QoS capabilities prediction.

Within this horizon Hp, the CNC will have to compute the bridge scheduling and transmit the configuration orders to the bridges to ensure the data packets transmission according to the scheduling until the horizon duration is ended. The end of the prediction horizon duration can define thus a next time to collect QoS capability predictions and schedule the next future bridge scheduling.

In the second embodiment typically, if the imposed horizon Hp is too long, the QoS capability prediction can give a poor QoS, as it would be the only one that can be guaranteed during a long horizon, and the prediction would be suboptimal. On the other hand, a short horizon Hp would possibly enable to guarantee a good QoS but might not allow the CNC to have sufficient time to compute the bridge scheduling efficiently.

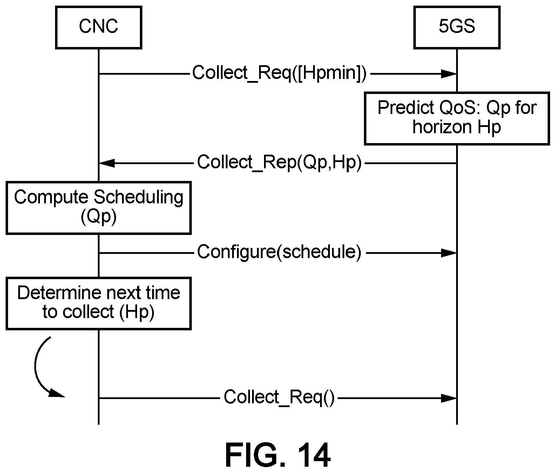

In a hybrid embodiment between first and second embodiments (shown in figure 14), the CNC imposes a minimum value Hpmin of the prediction horizon Hp to the 5GS so as to have sufficient time for the bridge scheduling inter alia. The 5GS can base its QoS capability prediction on this minimum horizon. The 5GS can also estimate a QoS capability for a longer horizon Hp, for example when radio network situation is stable enough thanks to slow moving terminals or a when it has a small number of data flows to handle, leading to a limited radio resource usage. Then the 5GS transmits this longer prediction horizon Hp with the associated QoS capability prediction to the CNC, which allows the CNC to have more than the minimum horizon Hpmin for the scheduling.

Finally, this hybrid embodiment establishes a trade-off between the first and second embodiments for the prediction horizon to apply for the scheduling thanks to a "negotiation" between the CNC and the 5GS.

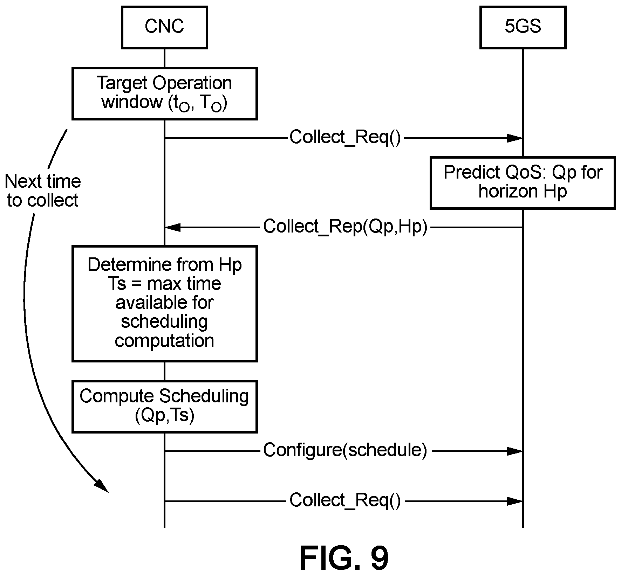

As shown in figure 9 detailed below, the CNC node is configured to adapt the scheduling computation time, for example by bounding the maximum computation time. The maximum computation time is computed by taking into account the target operation window duration and of course the QoS capability prediction horizon of the 5G network.

A more detailed embodiment is presented below. In order to set up the operation window, the following sequential steps is usually required:

- Step D: Obtaining the information related to the QoS capabilities prediction Qp of at least one datalink (the radio link between a terminal and its serving base station), that can be computed in the 5GS either at a terminal, in an eNodeB or a gNB or in any other 5G Core Network element (called generically "5GS" here):

   ○ $T_D$ and $t_D$ are respectively the duration and starting time of this information data collection phase, as shown on figure 5,
   ○ $T_P$ and $t_P$ are respectively the duration and starting time of the horizon window of the information related to the QoS capabilities prediction Qp of at least one data link. In practice, the values $T_P$ and $t_P$ are related for example to the radio link condition of the data link, which is varying, for example, because of the terminal mobility or changing cell load.

- Step S: Computing, at the CNC node, a scheduling from the obtained QoS capabilities prediction Qp:

   ○ $T_S$ and $t_S$ are respectively the duration and starting time of the computation phase of the scheduling in the CNC node.

- Step C: Configuring, by the CNC node, the TSN elements according to the computed scheduling:

   ○ $T_C$ and $t_C$ are respectively the duration and starting time of the TSN devices configuration phase.

- Step O: Sending data packets through the configured TSN elements according to the computed scheduling:

   ○ $T_O$ and $t_O$ are respectively the duration and starting time of the operation window during which the TSN devices use the computed and configured scheduling of steps S and C.

Thus, in order to achieve a correct ordering of operations and satisfy the availability of information for computing, the following properties must be fulfilled, as illustrated in figure 5:

- Condition $t_D + T_D \leq t_S$ ensures that the information related to the QoS capabilities prediction Qp of at least one data link has been received before scheduling computation starts. If no information is received for some of the data links at stake, the last received information for these data links is used instead.
- Condition $t_s + T_S \leq t_c$ ensures that the scheduling computation has ended before the configuration of the TSN network is performed.

- Condition $t_c + T_c \leq t_O$ ensures that the operation window starts after the configuration of the TSN elements has ended.
- Condition $t_P \leq t_O$ ensures that the horizon window of the information used for computing the scheduling starts before the operation window start.
- Condition $t_O + T_O \leq t_P + T_P$ ensures that the operation window ends before the end of the horizon window of the information used for computing the scheduling.

It appears then that the above listed parameters are interdependent.

A check of the conditions can be done by one of the involved network elements (for example a dedicated function in the CNC or a dedicated node in the TSN) after gathering the required information, and a feedback is provided as to whether the configuration ensures the validity of the scheduling computed from the QoS capabilities prediction during the operation window.

In the approach detailed below, a computation of the tuneable parameters is performed according to the non-tuneable ones, such that the validity of the scheduling computed from the QoS capabilities prediction is ensured during the operation window. This determination of parameters (DoP) can be executed at different times and by different network elements according to the embodiments.

Some of the conditions are ensured by the definition of a protocol involving that:

- The scheduling is computed only after receiving a message from the element performing the DoP (which ensures that $t_D + T_D \leq t_S$ is always satisfied)
- The configuration is started by the CNC only after it finishes the scheduling computation (which ensures that $t_S + T_S \leq t_c$ is always satisfied)
- The operation window only starts after the configuration has ended, by command of the CNC (which ensures that $t_c + T_c \leq t_O$ is always satisfied)

In addition, the gap in between the operations is typically a waiting time that should be included in the $T_D$, $T_S$, $T_C$ values. Thus, it is assumed in the following that no gap exists between the steps, which involves that $t_D + T_D = t_S$, $t_S + T_S = t_c$, $t_C + T_C = t_O$.

Finally, the system is parametrized by $t_D$, $T_D$, $T_S$, $T_C$, $T_O$ and $T_P$ and $t_P$ and the two following constraints must be satisfied:

- Condition $t_P \leq$ to ensures that the horizon of the QoS capabilities prediction used for computing the scheduling starts before the operation window start.
- Condition $t_O + T_O \leq t_P + T_P$ ensures that the operation window ends before the end of the horizon of the QoS capabilities prediction information used for computing the scheduling.

The timeline of these sequential steps, with no time gap between the steps, is shown in **Erreur ! Source du renvoi introuvable..**

As a remark, when several $T_P$ and $t_P$ values are collected for the DoP for several data links, combination of the values can be used to determine a single representative $T_P$ and $t_P$. For example, when the worst-case situation is considered, $\max(\{t_P\})$ is used as a representative value of $t_P$, and $\min(\{t_P + T_P\}) - \max(\{t_P\})$ can be used as a representative value of $T_P$.

Regarding the obtained parameters, $T_D$ is the duration of the collection of QoS capabilities prediction. During this phase, the network element computing the DoP typically sends a message to one or several 5G network elements and receives in response the QoS capabilities prediction. $T_D$ is typically a non-tuneable parameter, and it can be estimated considering the worst-case response time of the different bridges and the number of bridges in the network.

Tc is the duration of configuration phase. During this phase, the CNC node sends to each bridge of the network a schedule for the data flows. $T_C$ is typically a non-tuneable parameter, and it can be estimated considering the worst-case response time of the different bridges and the number of bridges in the network.

Ts is the duration for computing the scheduling. In one embodiment, this duration is fixed, and determined for example by measuring in advance the maximum computation time of the CNC node. In an alternative embodiment, the parameter Ts can be a tuneable parameter that can be calculated as described below.

$T_P$ is QoS capability prediction duration, a parameter of the prediction horizon Hp. $T_P$ can be a tuneable or a non-tuneable parameter depending on the embodiment.

In the first embodiment discussed above, the values $T_C$, $T_D$, $T_S$ are non-tuneable and obtained beforehand. The parameter $t_O$ is one instance of a repeating set of operation windows of duration To to be determined. The parameter $t_D$ is determined by $t_D = t_O - (T_C + T_D + T_S)$. For simplification, it is assumed that $t_P = t_D$ (the prediction QoS request being assumed to start from the request time). The prediction horizon $T_P$ is collected from the 5GS by the CNC node, and is therefore, in this first embodiment, imposed to the CNC node.

The duration $T_O$ is computed by $T_O = T_P - (T_C + T_D + T_S)$. $T_O$ is computed according to the obtained $T_P$.

An example of the first embodiment is presented in figure 7 where Hp is the prediction horizon of QoS capabilities prediction. Typically, Hp is a couple $([t_P], T_P)$ where $t_P$ can be optional. When $t_P$ is not provided, it means that the prediction starts from the current time, for example the time of reception of the collection request message. Otherwise ($t_P$ and $t_D$ are not equal), the 5GS provides in addition to the prediction horizon duration $T_P$ its starting time $t_p$.

The operation window can be further used to adapt the configuration loop duration to the prediction horizon provided by the 5GS. For example, the next time to start a new collection request is determined by considering the next operation window start at the end of previous operation window:

$$t_O(i+1) = t_O(i) + T_O(i)$$

Hence, if for example the mobile devices are moving fast in a given part of the factory, the radio conditions could evolve quickly. The duration of an accurate prediction of QoS capabilities can be then shorter, and the configuration loop is adapted accordingly in order to always have an optimised scheduling. When radio conditions are more stable, QoS capabilities prediction horizon could be farther. The configuration loop can evolve then accordingly, saving signalling and computational resources.

A possible constraint is that the operation window determination might happen after the reception of the collection response. Hence it could take place after of before the scheduling computation.

In the second embodiment, the values $T_D, T_S, T_C$ are non-tuneable and obtained beforehand. The parameter $t_O$ is one instance of a repeating set of operation windows of duration To which is fixed (pre-determined). The parameter $t_D$ is determined by $t_D = t_O - (T_C + T_D + T_S)$. For simplification, it is assumed that $t_P = t_D$ to compute a minimum prediction horizon $T_P$ as $T_P = T_O - (T_C + T_D + T_S)$. The parameter $T_P$ is provided to the 5GS which takes it into account for providing back QoS capability predictions that can be guaranteed to remain valid during the horizon imposed to the 5GS.

An example of the second embodiment is described in Erreur ! Source du renvoi introuvable., where Hp is the target prediction horizon of QoS capabilities prediction. Typically, Hp is a couple $([t_P], T_P)$, $t_p$ being optional. When $t_P$ is not provided, it means that the prediction should start from the current time, for example the time of reception of the collection request message ($t_p$ and $t_D$ are equal). If provided, $t_P$ can be comprised between $t_D$ (prediction QoS request starting from the request time) and $t_O$ (prediction QoS request starting from the beginning of the target operation window).

According to a possible third embodiment, the values $T_C, T_D$ are non-tuneable and obtained beforehand. $T_P$ and $T_S$ are to be determined. For simplification, it is assumed that the parameter $t_P = t_D$ (the prediction QoS request starting from the request time). The prediction horizon $T_P$ is collected from the 5GS by the CNC node. Then $T_S$ is computed according to the obtained $T_P$. The CNC node must compute the scheduling within this time Ts.

An example of the third embodiment is presented in **Erreur! Source du renvoi introuvable.,** where Hp is the prediction horizon of QoS capabilities prediction. Typically, Hp is a couple $([t_P], T_P)$, $t_p$ being optional. When $t_P$ is not provided, it means that the prediction starts from the current time, for example the time of reception of the collection request message.

In this third embodiment typically, the next time to collect Qp (and possibly Hp) from the 5GS can be imposed by a fixed duration of the operation window To, i.e. independently from the current prediction horizon Hp. Therefore, a constraint is to be fulfilled by the CNC to compute the scheduling during a restricted remaining computation period Ts, within one operation window.

Indeed, time constraints due to scheduling computations are to be considered in such a situation. The scheduling computation itself has a time constraint Ts, and the optimisation algorithm used for scheduling computation shall provide a result within a given time limit.

This can be achieved:

- by using optimization algorithms which computation can be stopped at any time such as genetic algorithms. In this case, the latest best solution obtained is the result used for the scheduling,

- or by adapting the computation resource dynamically to fulfil the computation time limit.

Additionally, the optimization algorithm can start its search from the previous solution instead of starting from scratch. Hence, the convergence of the algorithm is faster.

For the implementation of the scheduling computation and the use of its result, the CNC is provided with data flows characteristics and requirements, e.g. source, destination, maximum transmission delay, priority. The scheduling computation shall provide a scheduling result that fulfills the data flow requirements taking into account the QoS capabilities indicated by the network devices.

As the QoS capabilities indicated by the 5GS can evolve at each operation window, the scheduling result might evolve as well. This means that the end-to-end transmission times of the data flows could evolve among the different operation windows.

It may happen that, with a given QoS capability predictions provided, some data flows can no more be accepted in the operation window. If the scheduler can compute several schedules with different priorities, then it moves data flows among the different schedules depending on the data flow priorities, so that the higher-priority schedule at least fulfills the data flow requirements. Alternatively, data flows with lower priorities could be put as a "best-effort" data flows for the duration of the operation window.

Typically, the third embodiment is characterized by a scheduling computation with a time constraint. Hence, the scheduling result will depend on QoS capability predictions, but also on the time limit imposed to the algorithm. If the time limit is large, then the scheduling result is optimized, corresponding to the best solution the algorithm can find. When the time limit becomes a real constraint, then the result provided within the time limit could be a less optimized solution, leading possibly to an impossibility to accept all the data flows. In this case, one solution is to dynamically adapt the computation resource. Another possibility is to assign priorities to the data flows as described above.

Of course, some of the embodiments above can be combined together. Indeed, the embodiments above are not exclusive. For example:

- The CNC node can have a target minimum operation window (in embodiments 2 and 3),
- The CNC node can provide a minimum horizon prediction to 5GS (in embodiment 2 and hybrid embodiment),
- 5GS can provide back QoS predictions for a prediction horizon Hp (above a minimum horizon threshold typically), depending on cell load, device location and mobility (in embodiments 1, 2, and 3),
- The CNC node can determine from Hp a time constraint for the scheduling computation, if necessary (in embodiment 3),
- The operation window can be updated (in embodiment 1).

Hence, the typical exchanged data messages to collect QoS capabilities are the following:

- From the CNC node to 5GS: Collect_Req(([Hp])
- From 5GS to the CNC node: Collect_Rep(Qp, Hp)

with $Hp=([t_P], T_P)$

Instead of a regular collect, an "asynchronous" collect can be performed. In the previous embodiments indeed, it is assumed that the CNC sends a message to the 5GS each time it wants to start a collect cycle, and the 5GS provides its response upon reception of the request.

The collect can also be asynchronous, in another embodiment: the CNC node sends a first message indicating a request to get QoS capability prediction and prediction horizon. The 5GS can then send its response without other solicitation from the CNC node. For example, the 5GS can send new values when it estimates that the radio conditions have changed enough, and that it has a better prediction to provide. In this case, the CNC node triggers the determination of the new operation window from the reception of new QoS capability prediction and prediction horizon from the 5GS.

More generally, the description above presents the sequential steps for one operation window. In practice, it is reasonable to contemplate that the operation windows occur periodically and successively. In this case, additional constraints can be satisfied for ensuring no overlap in the pipelining of the sequential steps, as described in the following.

It is considered that the next operation window starts at last at the end of the previous one, and therefore:

$$t^{i+1}_O \leq t^i_O + T^i_O$$

The next horizon window starting at $t^{i+1}_P$ can start between $t^i_D$ and $t^{i+1}_O$

To have a continuous and non-overlapping valid operation mode, it can be decided to set:

$$t^{i+1}_O = t^i_O + T^i_O.$$

For continuous operation, t(i+1) can be set before the end of the current window. Setting it at the end can be seen as an optimization of window duration. But if, for example, the CNC node receives a new (Qp,Hp) asynchronous event, it can terminate window i before its end.

Depending on the previous embodiments, constraints shall remain valid.

Two operating modes can be defined from the beginning of $t^{i+1}_D$:

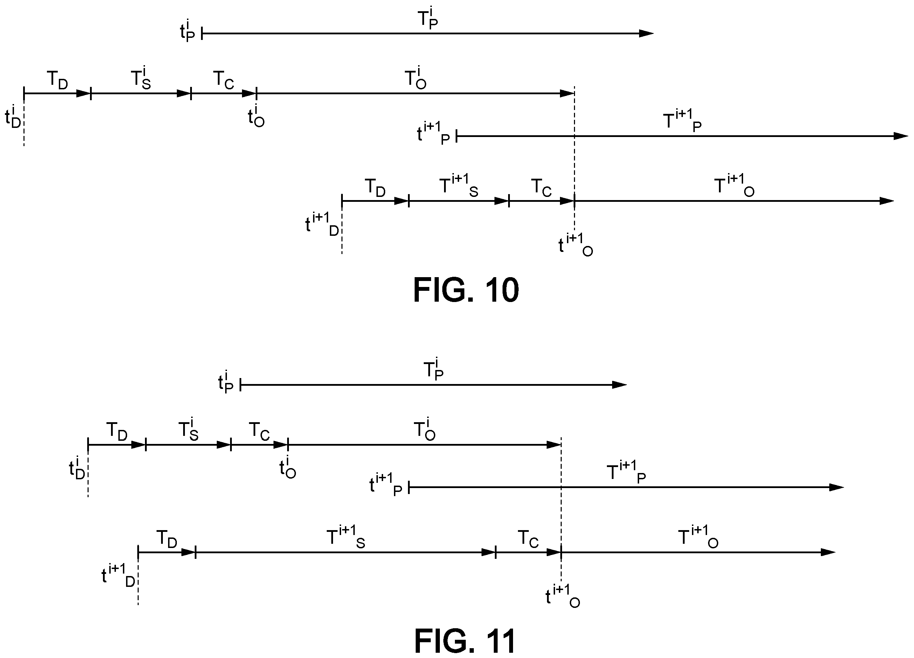

- A so-called "pipelining" operating mode if $t^{i+1}_D \geq t^i_O$, where next window i+1 steps D, S and C are done during previous window i step O as shown in figure 10, and

- A so-called "parallel" operating mode if $t^{i+1}_D \leq t^i_O$ and $t^{i+1}_D \geq t^i_D$, where one or more of next window i+1 steps D, S and C can be done during one or more D, S, C and O previous window i steps as shown in figure 11. Here, the CNC node computes the bridge scheduling for a current operation cycle and launches in parallel the collect of prediction Qp (and eventually its corresponding horizon Hp in the first or hybrid embodiment) for the next operation cycle.

Depending on the operating mode, some constraints for previous embodiments need to be valid.

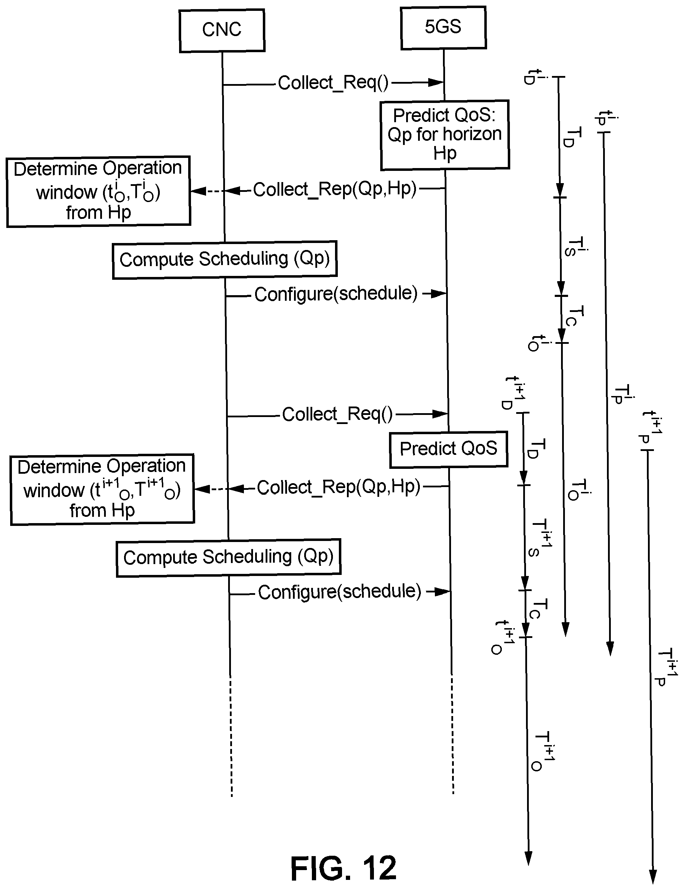

Typically, for the first and second embodiments, a successive windows operation is presented in figure 12. The collecting time is calculated as $t^{i+1}_D = t^{i+1}_O - (T_C + T_D + T_S)$ where $T_S = T^i_S = T^{i+1}_S$ and $t^{i+1}_O = t^i_O + T^i_O$ in a continuous operation mode.

Then, depending on when the next collecting time occurs, two cases can be contemplated:

- The pipelining operating mode when $t^{i+1}_D \geq t^i_O$ with:

  •

$$T^i_O \leq T^i_P - (t^i_P - t^i_O)$$

  (where $T^i_P$ must include $T^i_O$), and

  •

$$T^i_O \geq T_D + T_S + T_C$$

  (where $T^i_O$ must thus include next window steps D, S and C).

- The parallel operating mode when $t^{i+1}_D \geq t^i_D + T_D$ and $t^{i+1}_D \leq t^i_O$, where:

  ▪ $T^i_P$ is known at the end of collection request,
  ▪ $T^i_O \leq T^i_P - (t^i_P - t^i_D)$ if $t^{i+1}_D = t^i_D + T_D$, and
  ▪ $T^i_O \geq T_D + T_S + T_C - (T_S + T_C)$ then $T^i_O \geq T_D$ if $t^{i+1}_D = t^i_D + T_D$

  And when $t^{i+1}_D \geq t^i_D$, $t^{i+1}_D \leq t^i_D + T_D$ and $t^{i+1}_D \leq t^i_O$, where:

  ▪ $T^i_O \leq T^i_P - (T_D + T_S + T_C)$ if $t^{i+1}_D = t^i_D$

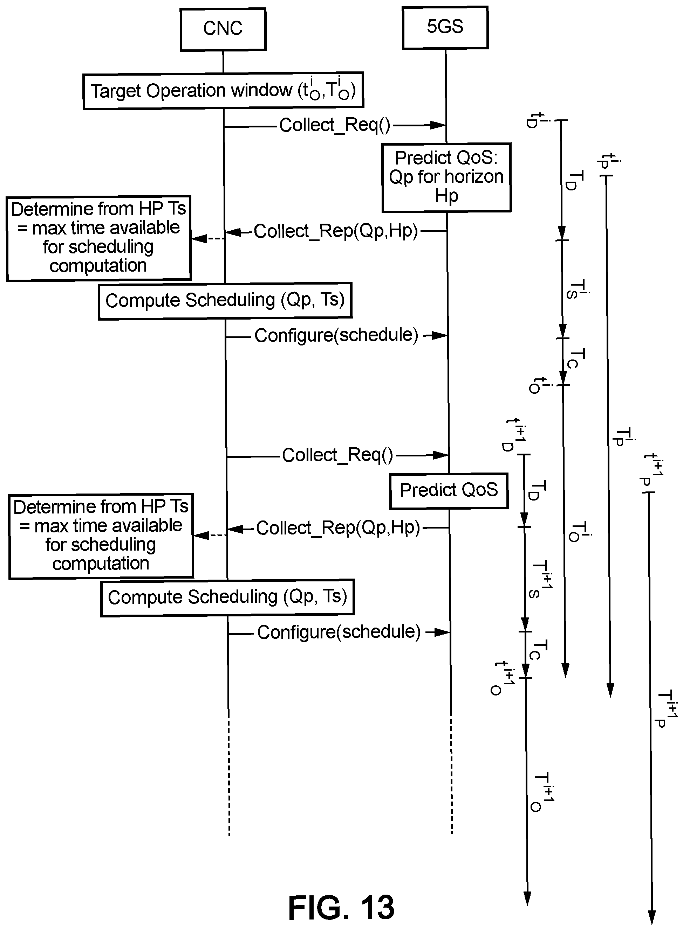

Now regarding the third embodiment, a successive windows operation is presented in figure 13 (implemented in this example according to the aforesaid pipelining mode), where the scheduling times $T^i_S$ and $T^{i+1}_S$ depend on $T^i_P$ and $T^{i+1}_P$.

$t^{i+1}_O = t^i_O + T^i_O$ in a continuous operation mode.

$T^i_O$ must be determined.

Depending on when the next collecting time occurs two cases can be contemplated:

- A pipelining operating mode when $t^{i+1}_D \geq t^i_O$:

  •

$$T^i_O \leq T^i_P - (t^i_P - t^i_O)$$

  (where $T^i_P$ must include $T^i_O$)

  •

$$T^i_O \geq T_D + T^{i+1}_S + T_C \text{ then } T^{i+1}_S \leq T^i_O - (T_D + T_C)$$

(where $T^i_O$ must include next window steps D, S and C)

- 

$$T^i_P+(t^i_P- t^i_D)\geq T^i_S +T^{i+1}_S+ 2T_D+2T_C$$

$T^i_S$ and $T^{i+1}_S$ must be balanced between current window steps and next window steps,

$T^{i+1}_S$ should be set to a minimum value $T_{Smin}$ , and

- The parallel operating mode, where:

- If $t^{i+1}_D \geq t^i_D+T_D$ and $t^{i+1}_D \leq t^i_O$ :

  - $T^i_P$ is known at the end of collection request,
  - $T^i_O\leq T^i_P- (t^i_P- t^i_D)$ if $t^{i+1}_D = t^i_D+T_D$
  - $T^i_O+T_C +T^i_S \geq T_D + T^{i+1}_S +T_C$
  - If $T^i_S = T^{i+1}_S = T_S$, then $T^i_O\geq T_D$ ,

- If $t^{i+1}_D \geq t^i_D$, $t^{i+1}_D \leq t^i_D+T_D$ and $t^{i+1}_D \leq t^i_O$ :

$$T^i_O \leq T^i_P - (T_D + T^i_S + T_C) \text{ and } T^i_O \leq T^i_P - (T_D + T^{i+1}_S + T_C) \text{ if } t^{i+1}_D = t^i_D$$

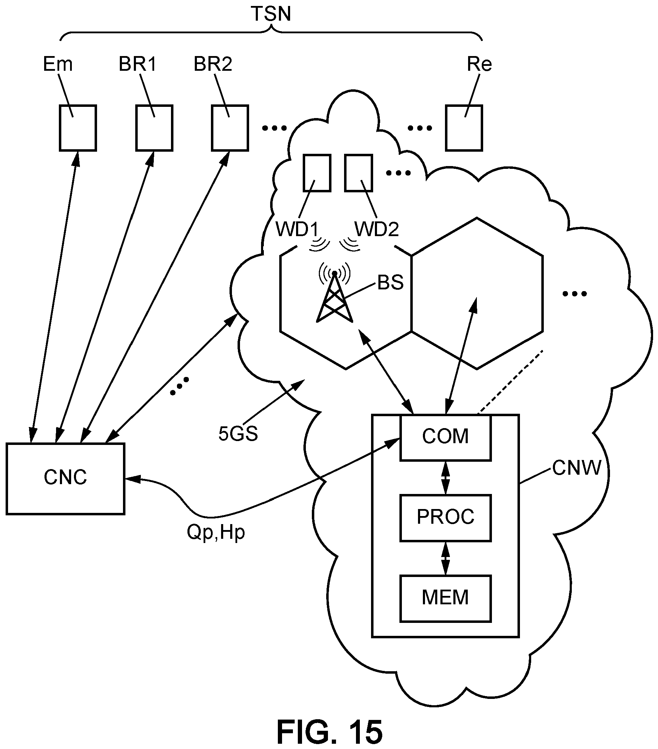

Figure 15 shows schematically a time sensitive network TSN where an emitter Em sends data packets to a receiver Re through bridges BR1, BR2, ..., of the network TSN. One of these bridges is a wireless bridge and can be for example a radiofrequency cellular network 5GS where one or several wireless devices WD1, WD2, ..., participate to the data transmission between the emitter and the receiver. As shown in the example of figure 15 for a cellular network, the wireless devices are connected to one or several base stations BS which can be connected to a core network CNW. The 5GS network (for example an entity CNW of the core network) can collect the QoS predictions Qpi (and possibly also their horizons Hpi, according to the aforesaid first embodiment) of the wireless devices involved in the data transmission between the emitter and the receiver, and can determine for example a common prediction horizon Hp among the involved devices (based for example on the one having the shortest prediction horizon) and the QoS prediction Qp being for example represented by a vector, the elements of which being the list of the Qpi collected among the involved devices.

An entity of the network TSN such as a Centralized Network Configuration node CNC can then compute a schedule of the transmission times of the TSN network bridges using, according to the present description, the QoS prediction Qp of the wireless network 5GS (provided by the entity CNW), and given its horizon Hp.

To that end, the entity CNW of the 5GS network comprises a processing unit including at least:

- A communication interface COM to transmit at least the prediction Qp (and possibly its horizon Hp) to the entity CNC, typically upon request from the entity CNC,
- A memory MEM storing at least instructions of a computer program causing the implementation of the method described above, when read by a processor PROC, and
- Such a processor PROC, connected to the memory MEM to execute the computer program instructions so as to collect and determine at least the prediction Qp of the 5GS network (and possibly its horizon Hp), and to the interface COM to send data of these parameters Qp (and possibly Hp) to the entity CNC.

The entity of the radiofrequency cellular network CNW (which can be an eNodeB or a gNB of the cellular network, or any entity of the core network, or even a base station, etc.) can be in charge of collecting, among wireless devices connected to the cellular network, their QoS prediction Qpi, given for a corresponding horizon Hpi. Typically, this entity CNW can collect these data at least among the wireless devices which are for example involved in the data transmission between the end stations Em, Re of the time sensitive network TSN. Alternatively, it can collect more generally these data from all the wireless devices connected to the cellular network, or only from some of them, typically from the ones connected to one or several base stations BS covering a region of interest (including a factory, or a district, etc., connected to the time sensitive network).

Based on this collection, the entity of the radiofrequency cellular network can determine a QoS prediction Qp which can be a list of Qpi or one value determined as the worse among the collected ones, for the whole radiofrequency cellular network. In order to schedule efficiently the transmission times, the common horizon Hp is determined also, typically for example as the shortest horizon among the horizons Hpi associated to the predictions Qpi. Then, the entity of the radiofrequency cellular network can forward at least the prediction Qp (and possibly its assigned horizon Hp in the first embodiment) to the entity CNC of the time sensitive network to perform the bridge scheduling.

Thanks to that cooperation between the entity CNC and the entity CNW, the prediction horizon Hp can be determined and can be used for determining further the aforesaid operation window defining the next time to collect parameter Qp and possibly parameter Hp.

**Claims**

1.  A method performed by an entity of a radiofrequency cellular network (5GS), for generating and forwarding data to schedule transmission times of intermediary bridges between end stations communicating with each other via a time sensitive network (TSN), at least one bridge of said intermediary bridges being a radiofrequency bridge involving said radiofrequency cellular network (5GS),

    Wherein, at least upon reception of a request from an entity (CNC) of the time sensitive network (TSN), said radiofrequency cellular network entity determines a capability prediction Qp of a current Quality of Service (QoS) of said wireless bridge, and transmits at least data of said prediction Qp to said entity (CNC) of the time sensitive network (TSN) in view to schedule said transmission times, based on said capability prediction Qp and further on a prediction horizon Hp corresponding to a validity duration of the QoS capability prediction Qp.

2.  The method according to claim 1, wherein said radiofrequency cellular network entity (5GS):

    - determines said prediction horizon Hp, and
    - transmits data of said prediction horizon Hp to said entity of the time sensitive network (CNC) in view to schedule said transmission times, based on the QoS capability prediction Qp and the prediction horizon Hp provided by the radiofrequency cellular network entity (5GS).

3.  The method according to claim 1, wherein said radiofrequency cellular network entity (5GS):

    - receives with said request an imposed value for said prediction horizon Hp,
    - determines the QoS capability prediction Qp which can be guaranteed for the imposed prediction horizon Hp, and
    - transmits data of the QoS capability prediction Qp determined based on the imposed value to said entity of the time sensitive network (TSN) in view to schedule said transmission times, based on the value of the prediction horizon Hp imposed to the radiofrequency cellular network entity (5GS) and on the corresponding QoS capability prediction Qp determined by the radiofrequency cellular network entity (5GS).

4.  The method according to claim 1, wherein said radiofrequency cellular network entity:

    - receives with said request an imposed minimum value for said prediction horizon Hp,
    - determines a QoS capability prediction Qp and a value of a prediction horizon Hp corresponding to the determined QoS capability prediction Qp, said determined prediction horizon Hp value being one of:

        * a second value of a prediction horizon Hp corresponding to the determined QoS capability prediction Qp, when the second value can be above the imposed minimum value, and
        * the imposed minimum value, when the QoS capability prediction Qp is to be determined on the basis of the imposed minimum value,

    - and transmits data of the QoS capability prediction Qp and of the determined value of prediction horizon Hp, to said entity of the time sensitive network (TSN) in view to schedule said transmission times.

5.  The method according to anyone of the preceding claims, wherein the radiofrequency cellular network entity (5GS) receives furthermore from the entity of the time sensitive network (TSN) a request ("Configure(schedule)") to configure said wireless bridge according to said scheduled transmission times, and wherein the request for QoS capability prediction Qp precedes (to) the request to configure the wireless bridge (tc) within an operation cycle ending with a period (To) of effective data transmission between the end stations.

6.  The method according to claim 5, wherein a total duration of said operation cycle is determined on the basis of the prediction horizon Hp given for said operation cycle, said operation cycle ending before said given prediction horizon Hp.

7. The method according to any one of claims 5 and 6, wherein the request for QoS capability prediction Qp of a current operation cycle is received by the radiofrequency cellular network entity (5GS) before the end of a period ($T_O$) of effective data transmission of a previous operation cycle preceding said current operation cycle.

8. The method according to any one of claims 5 and 6, wherein the request for QoS capability prediction Qp of a current operation cycle is received by the radiofrequency cellular network entity (5GS) before the request to configure the wireless bridge (tc) of a previous operation cycle preceding said current operation cycle.

9. The method according to any one of the preceding claims, wherein said radiofrequency cellular network entity:

    - collects from one or several elements of the radiofrequency cellular network QoS capability predictions Qpi which are guaranteed for a corresponding prediction horizon Hpi, and
    - determines a prediction horizon of the wireless bridge, as corresponding to the shortest prediction horizon collected over the elements of the radiofrequency cellular network.

10. The method according to any one of the preceding claims, wherein the entity (CNC) of the time sensitive network (TSN) transmits to the entity of the radiofrequency cellular network (5GS) the request to determine at least the QoS capability prediction Qp of the wireless bridge, and schedules said transmission times based on said determined capability prediction Qp and further on the prediction horizon Hp during which the entity of the radiofrequency cellular network (5GS) guarantees said determined capability prediction Qp.

11. A computer program comprising instructions causing the implementation of the method according to any one of the precedent claims, when said instructions are executed by a processing unit.

12. An entity of a radiofrequency cellular network (5GS), comprising a processing unit to perform the method as claimed in any one of claims 1 to 10.

13. The entity of claim 12, configured to be incorporated in a core network of said radiofrequency cellular network (5GS).

14. The entity of claim 13, corresponding to one element among an eNodeB and a gNB of said radiofrequency cellular network (5GS).

15. A system comprising the entity according to any one of claims 12 to 14, and an entity of the time sensitive network (TSN), to schedule transmission times of intermediary bridges between end stations communicating with each other via the time sensitive network (TSN), at least one bridge of said intermediary bridges being a radiofrequency bridge involving the radiofrequency cellular network (5GS),
Wherein said entity (CNC) of the time sensitive network (TSN) is configured to transmit a request to the entity of the radiofrequency cellular network (5GS) to determine a QoS capability prediction Qp of the wireless bridge, and to schedule said transmission times based on said QoS capability prediction Qp provided by the entity of a radiofrequency cellular network (5GS) and further on a prediction horizon Hp corresponding to a validity duration of said QoS capability prediction Qp.

16. The system of claim 15, wherein said entity of the time sensitive network (TSN) is a Centralized Network Configuration (CNC) node of said time sensitive network.

CUC

User/Network
Interface

CNC

User Configuration Protocol

User Configuration Protocol

Network Management Protocol

Talker

Bridge

Bridge

Bridge

Listener

**FIG. 1**

5G System
(acting as logical
TSN bridge)

Expose derived QoS attributes
(independent/dependent Delay) to TSN

Receive the schedules for TSN streams and
deliver the exposed QoS characteristics

TSN CNC

**FIG. 2**

FIG. 3

FIG. 4

$T_P$

$t_P$

$T_D$ $T_S$ $T_C$ $T_O$

$t_D$ $t_S$ $t_S$ $t_O$

$t_D + T_D \leq t_S$ $t_S + T_S \leq t_C$ $t_c + T_C \leq t_O$ $t_O + T_O \leq t_P + T_P$

$t_p \leq t_O$

## FIG. 5

$T_P$

$t_P$

$T_D$ $T_S$ $T_C$ $T_O$

$t_D$ $t_O$

$t_p \leq t_O$ $t_O + T_O \leq t_P + T_P$

## FIG. 6

CNC

Collect_Req() →

Predict QoS: Qp for horizon Hp

← Collect_Rep(Qp,Hp)

Compute Scheduling (Qp)

Configure(schedule) →

Determine Operation window ($t_O$, $T_O$) from Hp

Next time to collect

Collect_Req() →

5GS

## FIG. 7

CNC

Target Operation window ($t_O$, $T_O$)

Deduce target horizon Hp

Collect_Req(Qp) →

Predict QoS: Qp for horizon Hp

Next time to collect

← Collect_Rep(Qp)

Compute Scheduling (Qp)

Configure(schedule) →

Collect_Req(Qp) →

5GS

## FIG. 8

FIG. 9

**FIG. 10**

**FIG. 11**

FIG. 12

**FIG. 13**

FIG. 14

## FIG. 15

| | Europäisches Patentamt European Patent Office Office européen des brevets | **EUROPEAN SEARCH REPORT** | **Application Number** EP 24 30 5256 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/284077 A1 (PATEROMICHELAKIS EMMANOUIL [DE]) 7 September 2023 (2023-09-07) * paragraph [0045] - paragraph [0048]; figures 1-5 * * paragraph [0071] - paragraph [0086] * * paragraph [0098] - paragraph [0110] * * paragraph [0115] * * paragraph [0128] - paragraph [0139] * * paragraph [0158] - paragraph [0167] * * paragraph [0182] - paragraph [0188] * ----- | 1-16 | INV. H04W28/02 H04W72/543 H04L47/2491 ADD. H04W72/0446 |
| X A | EP 4 187 960 A1 (HUAWEI TECH CO LTD [CN]) 31 May 2023 (2023-05-31) * paragraph [0007] - paragraph [0009]; figures 1-5, 7 * * paragraph [0074] * * paragraph [0136] * * paragraph [0137] * * paragraph [0156] - paragraph [0159] * * paragraph [0166] - paragraph [0168] * * paragraph [0202] * * paragraph [0218] - paragraph [0223] * * paragraph [0226] - paragraph [0227] * ----- | 1,10-13, 15,16 2-9,14 | |
| A | WO 2021/067130 A1 (NOKIA TECHNOLOGIES OY [FI]; NOKIA AMERICA CORP [US]) 8 April 2021 (2021-04-08) * paragraph [0004] - paragraph [0007]; figures 2, 3 * * paragraph [0020] - paragraph [0024] * * paragraph [0039] - paragraph [0043] * ----- -/-- | 1-16 | TECHNICAL FIELDS SEARCHED (IPC) H04W H04L |

The present search report has been drawn up for all claims

| Place of search | Date of completion of the search | Examiner |
|---|---|---|
| The Hague | 14 June 2024 | Tortelli, Michele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 24 30 5256

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 068 706 A1 (MITSUBISHI ELECTRIC R&D CT EUROPE BV [NL] ET AL.) 5 October 2022 (2022-10-05) * paragraph [0023] * * paragraph [0029] - paragraph [0032] * * paragraph [0054] * * paragraph [0067] - paragraph [0070] * ----- | 1-16 | |
| | | | **TECHNICAL FIELDS SEARCHED (IPC)** |

The present search report has been drawn up for all claims

| Place of search | Date of completion of the search | Examiner |
|---|---|---|
| The Hague | 14 June 2024 | Tortelli, Michele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 24 30 5256

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2024

| Patent document cited in search report | Publication date | Patent family member(s) | Publication date |
|---|---|---|---|
| US 2023284077 A1 | 07-09-2023 | CN 115769626 A<br>EP 4179713 A1<br>US 2023284077 A1<br>WO 2022008086 A1 | 07-03-2023<br>17-05-2023<br>07-09-2023<br>13-01-2022 |
| EP 4187960 A1 | 31-05-2023 | CN 114071499 A<br>EP 4187960 A1<br>US 2023189309 A1<br>WO 2022028087 A1 | 18-02-2022<br>31-05-2023<br>15-06-2023<br>10-02-2022 |
| WO 2021067130 A1 | 08-04-2021 | NONE | |
| EP 4068706 A1 | 05-10-2022 | CN 117063453 A<br>EP 4068706 A1<br>JP 2024501088 A<br>KR 20230152082 A<br>WO 2022208975 A1 | 14-11-2023<br>05-10-2022<br>10-01-2024<br>02-11-2023<br>06-10-2022 |

EPO FORM P0459

For more details about this annex : see Official Journal of the European Patent Office, No. 12/82